# EUROPEAN PATENT APPLICATION

(11) **EP 1 645 682 A1**
(43) Date of publication of application: **12.04.2006**
(21) Application number: 04380200.8
(22) Date of filing: 10.10.2004
(51) Int. Cl.: D06N 7/00, B60N 3/04, B32B 27/12, B32B 27/20

(54) **Manufacturing procedure for carpeting with layered undrlay**

(71) Applicant: Centro Tecnologico de Grupo Copo, S.L., 36416 Mos, Pontevedra (ES)
(72) Inventor: Reyes Crespo, Horacio Juan, 36146 Mos Pontevedra (ES)
(74) Representative: Temino Ceniceros, Ignacio

(57) **Abstract**

Process for making a carpeting material with underlay, particularly as upholstery material inside of a vehicle or the like, comprising calendering an outer layer (1,4) consisting of mixtures of polyolefin fibers with a mineral filled polyolefin middle or lower layer (2,5) and press molding the laminate. A product with different colours can be obtained by adding different colouring agents. It can be recycled, is acoustic and thermal insulating, elastic and provides a high level of comfort.

## Description

### OBJECT OF THE INVENTION

The present invention refers to the manufacturing procedure for carpeting with underlay of two or more substrates consisting of mixtures of different polyolefins in its middle layer, and polyolefin fibres on the external layers, thus becoming carpets with underlay used for upholstering the interior of vehicles, as well as wheel housings, the linings of the boot area, etc.

The aim of the invention is to provide a far simpler and more efficient method than those applied up until now in order to obtain a recyclable product that features improvements in terms of soundproofing and thermal insulation, providing the vehicle in question with a high level of comfort.

### BACKGROUND TO THE INVENTION

Regarding the interior areas of different kinds of vehicles currently available on the market, it is standard practice to use different kinds of materials obtained in different ways for producing the carpets used for covering the floors, wheel housings, under-floor storage areas, linings, in short, all nature of interior upholstery, with a series of characteristics and features that consumers demand nowadays.

The purpose of fitting this internal upholstery inside vehicles, apart from the fact that from a decorative point of view it is much more attractive and pleasing to the eye, creating an atmosphere that is significantly more comfortable, is to provide a series of features in terms of acoustics, absorbing the typical vibrations and noises that vehicles generate when in operation.

A further function of this internal upholstery is to provide the thermal insulation required in these cases for the vehicles.

At the present time, obtaining this carpeting for interior upholstery involves a complex process, whereby the different layers that constitute said fabric are joined by means of thermoformable resins, which requires a prior calendering procedure for joining these layers.

This method involves a greater number of steps in the overall process of producing the pieces of carpeting, which considerably complicates the process, at the same time as it increases the costs involved in the equipment required for undertaking it.

### DESCRIPTION OF THE INVENTION

The procedure for manufacturing carpet with layered underlay as proposed by the invention provides a fully satisfactory solution to the problems posed above.

It is a process for producing carpeting with underlay of two or more substrates, consisting of mixtures of different polyolefins in its middle layer and mixtures of polyolefin fibres in the external layers.

This carpeting with underlay is used for providing the upholstery inside vehicles, fitted to the floors of the vehicles, to the wheel housings, under-floor storage areas, linings in the boot area and other appropriate parts of the vehicle.

The composition of these sheets is based largely on the use of various polyolefins, whereby each sheet is to consist of several layers, with the composition of the sheets always having a middle or lower layer and an upper or external layer, whose composition and characteristics are different.

The middle or lower layer consists of a high content of mineral load, in a proportion that ranges between 20 and 80%. This mineral load is made up of carbonates or talcum powder, and is homogenised through the addition of polyolefins, which in turn act as product load. Consequently, this provides a composite with a compact and rigid appearance, providing the features required accordingly.

This will be the middle or lower layer depending on the number of layers constituting the product: if there are only two, then it will be the lower one, but if the product comprises more than two layers, it will be the middle one.

The upper or external layer consists of a mixture of 100% polyolefin fibres, providing the typical appearance of this carpeting, namely soft and pliable.

The performance of the procedure of this invention involves a calendering process for laminating the various layers mentioned above, with the final result being a product with an underlay of two or more layers. Nevertheless, given the absence of thermoformable resins for the joining, the system provides the possibility of carrying out the process without the prior calendering operation for joining the various layers.

Finally, the external finish of this multi-layer composite provides a standard "carpet" appearance, which helps to provide a finish of recognised quality, which gives the vehicle the physical and mechanical properties specified by manufacturers, as well as a high level of comfort.

The composite described above may be processed, for obtaining the different items of upholstery, using innovative techniques, which enables the production of an end product by means of the process of pressure moulding.

This end product allows for the inclusion of other soundproofing agents, without the need for adding adhesive products for joining the different components that are to form the layers, considerably improving the product's specifications.

Likewise, it allows for giving the items different colours, through the addition of different colouring agents to the composite during the processing stage, depending in each case on the colour required by the market.

### DESCRIPTION OF THE DRAWINGS

In order to complement the description that is being given and to further a better understanding of the nature of the invention, in accordance with a preferential example of the practical performance of the same, attachment is made, as an integral part of said description, of a set of drawings that for illustrative and not restrictive purposes depict the following:
Figure 1. It provides a schematic depiction of a layered sheet for obtaining carpeting with layered underlay as proposed by the invention, in which three layers can be seen, two external ones and a middle one.
Figure 2. It provides a schematic depiction of another layered sheet similar to the previous one, in which only two layers can be seen: an upper and a lower one.

### PREFERRED EMBODYMENT OF THE INVENTION

On the basis of the above figures, in accordance with an example of a preferential performance of the invention, it may be seen how the carpeting with layered underlay, produced as per the manufacturing procedure that the invention propounds, consists of a series of layers that imbue it with the specifications required for its use in providing upholstery for the inside of vehicles.

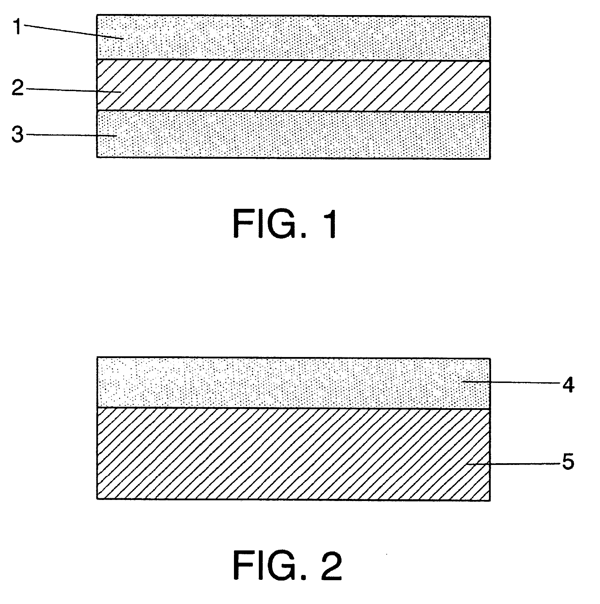

Specifically, the layered sheet depicted in figure 1 consists of three layers: an upper layer (1), a middle layer (2) and a lower layer (3); noteworthy amongst these layers is the upper or external layer (1) consisting of mixtures of 100% polyolefin fibres, and the middle layer (2), with a high content of mineral load based on carbonates or talcum powder, which is homogenised by means of polyolefins.

Figure 2 depicts a layered sheet similar to the one in figure 1, but which is made up of only two layers, an upper layer (4) with similar characteristics to the previous upper or external layer (1), and a lower layer (5), which has the same properties that had been assigned to the middle layer (2) in figure 1.

The performance of this invention procedure for obtaining the layered sheets that will constitute the carpeting consists of a calendering process for laminating the aforementioned layers. The different pieces are finally obtained by pressure moulding.

The use of sheets of this kind constitutes a significant technological contribution regarding those in standard use, providing improvements in terms of acoustics, thermal insulation, elasticity, etc, allowing for major pressing with a view to subsequent moulding, low combustibility, with a value less than or equal to 100 mm/min, resistance to wear, with a value greater than or equal to 3/4, resistance to acids and chemical agents.

The contribution of each layer, regarding the required specifications, is different, so the middle or lower layer, by being composed of mineral loads with polyolefins, in one or more layers, permits achieving soundproofing properties that are above normal, forming a composite that absorbs low sound frequencies as well as vibrations, providing the vehicle with a high level of comfort.

On the other hand, the upper or external layer, by being composed of mixtures of polyolefin fibres, produces an elastic product with relatively low resistance, being easily shaped and fashioned by mechanical forces, resistant to wear and to different chemical actions.

Given its composition of polyolefins, this product is 100% recyclable for producing pieces of the same characteristics, in compliance with regulations on quality and environment laid down for the finished product.

A further advantage provided by the procedure proposed by the invention is the possibility of carrying out the assembly of the product directly in the manufacturing process for the end piece, without the prior need to perform the calendering of the same.

It is also important to note another series of advantages associated with the use of this kind of composites for obtaining carpeting with layered underlay, as are:
- The product acquires the necessary properties to be able to withstand wear such as rubbing and punching, with this latter characteristic registering values greater than or equal to 150 N.
- It provides the option for producing pieces in a range of colours through the addition of different colourings to the composite.
- The whole is given suitable dimensional stability in terms of dealing with high stresses.
- The end product allows for the addition of other soundproofing agents without the need for adhesive products, improving the product's characteristics.

## Claims

1. Manufacturing procedure for carpeting with layered underlay, of those normally used for producing the upholstery for the inside of a vehicle, boot and such like, **characterised by** the fact that it consists of a process of calendering of the laminate of two or more layers, middle and outside, with the upper layer (1 ― 4) consisting of mixtures of polyolefin fibres and the middle (2) or lower (5) layer consisting of mineral loads with polyolefins, with the pieces of the end product being obtained by means of a pressure moulding process.

2. Manufacturing procedure for carpeting with layered underlay, as per claim 1, **characterised by** the fact said upper layer (1 - 4) consists of 100% polyolefin fibres.

3. Manufacturing procedure for carpeting with layered underlay, as per claim 1, **characterised by** the fact said middle (2) or lower (5) layer consists of mineral loads in a proportion ranging between 20 and 80%.

4. Manufacturing procedure for carpeting with layered underlay, as per claim 1, **characterised by** the fact said mineral load, which is included in the middle (2) or lower (5) layer, is selected between carbonates and talcum powder.

5. Manufacturing procedure for carpeting with layered underlay, as per claim 1, **characterised by** the fact that through being free of thermoformable resins for joining, the process may be carried out without the prior performance of the calendering procedure for joining the various layers.

6. Manufacturing procedure for carpeting with layered underlay, as per claim 1, **characterised by** the fact different colour pieces are obtained by adding different colourings to the composite.
